# EUROPÄISCHE PATENTSCHRIFT

(11) **EP 2 848 562 B1**
(45) Veröffentlichungstag und Bekanntmachung des Hinweises auf die Patenterteilung: **29.06.2016**
(21) Anmeldenummer: 14180404.7
(22) Anmeldetag: 08.08.2014
(51) Int. Cl.: B65G 47/52, B65G 47/84, B65G 57/06, B65G 57/24

(54) **Verfahren und Vorrichtung zur horizontalen Verschiebung von Artikellagen zwischen benachbarten Fördermodulen**
Method and device for horizontal movement of layers of articles between adjacent conveyor modules
Procédé et dispositif de déplacement horizontal d'articles entre des modules voisins

(30) Priorität: 13.09.2013 DE 102013218442
(43) Veröffentlichungstag der Anmeldung: 18.03.2015
(73) Patentinhaber: Krones Aktiengesellschaft, 93073 Neutraubling (DE)
(72) Erfinder: Beer, Erhard, 93073 Neutraubling (DE); Osterhammer, Martin, 93073 Neutraubling (DE)
(74) Vertreter: Benninger, Johannes

(56) Entgegenhaltungen:
- EP-A1- 1 908 709
- WO-A1-2013/038102
- NL-A- 8 801 528
- US-A- 5 163 808

## Beschreibung

Die vorliegende Erfindung betrifft ein Verfahren zur horizontalen Verschiebung von Artikelgruppen oder -lagen zwischen benachbarten Fördermodulen mit den Merkmalen des unabhängigen Verfahrensanspruchs 1. Die Erfindung betrifft zudem eine entsprechende Vorrichtung mit den Merkmalen des unabhängigen Anspruchs 8.

Zur Palettierung von Artikelgruppen oder -lagen durchlaufen die Artikel normalerweise zunächst eine Gruppierstation, in der die zunächst einreihig oder mehrreihig hintereinander transportierten Artikel zu palettierfähigen Lagen verschoben und/oder zusammengestellt werden. Diese palettierfähigen Lagen müssen an eine dafür geeignete Beladestation überführt werden, die in der Lage ist, Hubbewegungen durchzuführen. Die Beladestation legt diese Artikellagen dann an einem gewünschten Ort ab, bspw. an einem sog. Stapelplatz und einer darauf befindlichen Palette. Die Bereitstellungsstation und die Gruppierstation können wahlweise eine Einheit darstellen und/oder unmittelbar miteinander gekoppelt sein. Die Bereitstellungsstation und/oder die Gruppierstation umfassen eine Auflagefläche oder Auflageebene, auf der die Artikel gruppiert und zu einer Lage zusammengestellt werden. Die Beladestation umfasst ebenso eine Auflageebene, die einteilig oder auch zwei- oder mehrteilig ausgeführt sein kann. Bei einer bspw. zweiteilig ausgebildeten Auflagefläche der Beladestation besteht die Auflagefläche aus zwei Tragböden oder sog. Beladeplatten, welche im Beladezustand geschlossen sind und anschließend während der Abgabe- oder Ablegephase zum Ablegen der Artikellage auf einem Stapelplatz oder einer Palette geöffnet werden. Dem Fachmann sind hier zahlreiche Varianten bekannt, wie z.B. Jalousiegreiferköpfe oder ähnliches. Dabei verläuft ein solches Palettierverfahren mit einer aus dem Stand der Technik bekannten Palettiervorrichtung in einer Weise, dass zunächst Artikel mittels einer Gruppiereinrichtung zu einer palettierfähigen Lage zusammengestellt werden und im Anschluss daran von einem Bereitstellungsplatz bzw. einer Bereitstellungsstation in die Beladestation übergeben werden. Hierzu ist es notwendig, dass die Beladestation, wie z.B. ein an einem Hubwerk oder auch Roboter angeordneter Jalousiegreiferkopf, sich an den Bereitstellungsplatz anschließt, damit die Überführung der Artikellage in die Beladestation erfolgen kann. Dabei verweilt der Jalousiegreiferkopf bzw. die Beladestation so lange an Ort und Stelle, bis die Lage vollständig von der Bereitstellungsstation in die Beladestation übergeben wurde. Befindet sich die Artikellage vollständig in der Beladestation, so positioniert die Beladestation durch horizontale und vertikale Bewegungen die Ärtikellage an einem gewünschten Abgabeort, meist auf einer auf einem Stapelplatz bereitgestellten Palette. Im Anschluss daran erfolgt die gleiche Prozedur erneut so lange, bis die gewünschte Anzahl an Lagen auf der Palette abgelegt wurde.

Die DE 10 2008 015 278 A1 offenbart eine Vorrichtung zum Beladen von Paletten mit Stückgütern mit einer Stückgutbereitstellungsstation und einer Übersetzvorrichtung zum Übersetzen der Gruppe von Stückgütern von der Stückgutbereitstellungsstation auf eine an einem Stapelplatz bereitgehaltene Palette und/oder eine bereits darauf befindliche übergesetzte Stückgutschicht. Die EP 1 321 396 A1 offenbart eine weitere Palettiervorrichtung, bei der Artikel in ungeordneter Weise von einer Horizontalfördereinrichtung in seitlicher Richtung verschoben und dabei gruppiert werden, bevor sie in kompletten Lagen auf eine Hubeinrichtung überführt werden. Die Hubeinrichtung bzw. Transferplattform dient dabei als Höhenausgleich zwischen der Gruppierstation und der Beladestation, welche die Lagen übereinander stapelt und mittels eines zu öffnenden Rollbodens auf einer Palette ablegt.

Aus der EP 1 908 709 A1 sind ein Verfahren und eine Vorrichtung zur Aufnahme und zum Umsetzen von Gebinden bekannt. Die Vorrichtung weist einen Tragboden für die Gebinde mit einer offenen Vorderseite zum Einbringen der Gebinde auf. Ein beweglicher Schieber dient dem Verlagern der Gebinde entlang einer horizontalen Aufnahmerichtung durch die offene Vorderseite.

Die WO 2013/038102 A1 offenbart den Oberbegriff des Anspruchs 1 und 8, d.h. eine Vorrichtung und ein Verfahren mit einer Führungssäule, einer Aufnahmeeinheit, einer Ausgabeeinheit und einem Palettenförderer zur Verschiebung von definierten Objekten von einem Förderband auf eine Palette. Die auf einem Förderband ankommenden Objekte können mittels eines Schiebers horizontal in die Ausgabeeinheit verschoben werden. Die Ausgabeeinheit gibt anschließend das eingeschobene Objekt auf der Palette frei. der Die Aufnahme- und Ausgabeeinheiten sind höhenverstellbar ausgebildet, d.h. sie können entlang der Führungssäule vertikal verschoben werden, so dass die Objekte auf der Palette entsprechend gestapelt werden können.

Ein vorrangiges Ziel der vorliegenden Erfindung besteht darin, bei stationären und/oder vertikal beweglichen Auflageebenen aufeinander folgender Stationen eines Transportsystems eine Verschiebung von kompletten Artikel- oder Gebindelagen mit kurzen Transferzeiten und mit möglichst geringen Fehlfunktionen zu ermöglichen. In diesem Zusammenhang sollen die Artikel oder Gebinde der überschobenen Artikel- oder Gebindelagen möglichst exakt ihre jeweiligen räumlichen Ausrichtungen zueinander beibehalten.

Dieses Ziel wird mit einem Verfahren zur horizontalen Verschiebung von Artikelgruppen oder Artikellagen von einer vertikal beweglichen ersten Auflageebene eines ersten Fördermoduls auf eine vertikal bewegliche zweite Auflageebene eines dem ersten Fördermodul in einer Förderrichtung unmittelbar nachgeordneten zweiten Fördermoduls erreicht. Die Verschiebung erfolgt erfindungsgemäß mittels wenigstens einer rahmenartigen Überschubeinrichtung, welche von oben über die jeweils zu verschiebende Artikelgruppe oder Artikellage geschoben wird und diese umgreift. Nach seiner Absenkung umgreift die Überschubeinrichtung bzw. der Überschubrahmen die Artikelgruppe oder Artikellage allseitig, so dass er sie in Förderrichtung unter exakter Aufrechterhaltung des Lagenbildes, d.h. der räumlichen Zuordnung der einzelnen, aneinander stehenden Artikel zueinander, verschieben kann. Die Überschubeinrichtung bzw. der Überschubrahmen bewegt sich während der Überschubbewegung einer Artikelgruppe oder Artikellage vom ersten Fördermodul zum zweiten Fördermodul. Zudem bilden die Auflageebenen der ersten und zweiten Fördermodule zumindest während der Überschubbewegung eine gemeinsame, in etwa auf gleicher Höhe befindliche oder gleichsinnig vertikal bewegte Überschubfläche.

Die Überschubeinrichtung kann insbesondere durch einen vertikal und horizontal beweglichen Überschubrahmen gebildet sein, der von oben über eine auf dem ersten Fördermodul stehende Artikelgruppe oder Artikellage geschoben wird, so dass er die Artikelgruppe oder Artikellage allseitig umschließt und diese anschließend vom einen auf das in Förderrichtung nachfolgende Fördermodul überschieben kann, ohne dass dabei die Gefahr besteht, dass sich die Lagenformation bzw. die Lage der einzelnen Artikel zueinander verschiebt oder anderweitig beeinträchtigt wird. Nachdem die Überschubeinrichtung bzw. der Überschubrahmen die zu verschiebende Artikelgruppe oder Artikellage in horizontaler Richtung entlang der Überschubfläche auf das zweite Fördermodul geschoben hat, kann er anschließend von dort nach oben von der verschobenen Artikelgruppe oder Artikellage abgehoben werden.

Eine vom Überschubrahmen umschlossene Fläche entspricht zweckmäßigerweise in etwa der Grundfläche einer zu überschiebenden Artikelgruppe oder Artikellage, wobei ggf. vorgesehen sein kann, dass die Größe des Überschubrahmens bzw. seine Grundfläche oder die Abstände der jeweils gegenüber liegenden Seitenflächen voneinander verstellbar ist. Wenn zudem die Seitenflächen jeweils nach unten trichterförmig aufgeweitet sind, kann gewährleistet werden, dass sich der Überschubrahmen nicht mit randseitig stehenden Artikeln verkanten kann, wenn er von oben aufgesetzt wird.

Bei dem erfindungsgemäßen Verfahren kann eine erste Endlage des Überschubrahmens in horizontaler Richtung im Bereich des ersten Fördermoduls liegen. Dementsprechend kann eine zweite Endlage des Überschubrahmens in horizontaler Richtung im Bereich des zweiten Fördermoduls liegen. Weiterhin kann vorgesehen sein, dass das vertikal bewegliche zweite Fördermodul für die Ablage einer Artikellage oder Artikelgruppe auf das Niveau eines Stapelplatzes absenkbar oder anhebbar ist. Dabei ist es notwendig, dass die ersten und zweiten Fördermodule während des Überschubvorganges in etwa synchrone Vertikalbewegungen ausführen, da ansonsten eine Stufe entstünde, die den Überschubvorgang stören oder beeinträchtigen könnte.

Dem ersten Modul kann insbesondere eine feststehende oder vertikal bewegliche Gruppierstation vorgeordnet sein. Das erste Modul kann bspw. durch eine sog. Transferstation gebildet sein, die vertikal beweglich ist. Das zweite Modul kann bspw. durch eine sog. Beladestation gebildet sein, die ein Hubwerk aufweisen kann. Der Überschubrahmen kann an diesem Hubwerk der Beladestation geführt sein, ist aber vorzugsweise unabhängig von der Beladestation, jedoch in allen Bewegungszuständen oberhalb von dieser, vertikal verstellbar. Der Überschubrahmen kann somit am Hubwerk aufgehängt und zusätzlich zur Sicherstellung seiner Bewegungsmöglichkeiten zwischen den Endlagen im Bereich der zu überdeckenden Fördermodule horizontal verstellbar sein.

Die Erfindung umfasst weiterhin eine Vorrichtung zur Handhabung und/oder zur Stapelung und/oder Palettierung von Artikelgruppen oder Artikellagen. Die erfindungsgemäße Vorrichtung umfasst ein vertikal bewegliches erstes Fördermodul mit einer ersten Auflageebene und ein dem ersten Fördermodul in einer Förderrichtung unmittelbar nachgeordnetes zweites Fördermodul mit einer zweiten Auflageebene. Außerdem umfasst die Vorrichtung wenigsten eine vertikal bewegliche, rahmenartige Überschubeinrichtung zur schiebenden Überführung einer Artikelgruppe oder Artikellage vom ersten zum zweiten Fördermodul, wobei sie die geschobene Artikelgruppe oder Artikellage allseitig umgreift. Zumindest während der Überschubbewegung bilden die Auflageebenen der ersten und zweiten Fördermodule eine gemeinsame, in etwa auf gleicher Höhe befindliche oder gleichsinnig vertikal bewegte Überschubfläche. Die Überschubeinrichtung der Vorrichtung kann insbesondere durch einen vertikal und horizontal beweglichen Überschubrahmen gebildet sein, der von oben über eine auf dem ersten Fördermodul stehende Artikelgruppe oder Artikellage geschoben wird. Wahlweise kann die Größe des Überschubrahmens und/oder die Abstände seiner jeweils gegenüber liegenden Seitenflächen verstellbar ausgebildet sein. Zudem kann es von Vorteil sein, wenn die Seitenflächen des Überschubrahmens nach unten hin jeweils trichterförmig aufgeweitet sind.

Bei dem erfindungsgemäßen Verfahren wird die Förderung von Artikellagen innerhalb einer Förderstrecke dadurch beschleunigt, dass nicht mehr zwingend ein Stillstand von beweglichen Auflageebenen der Module gefordert wird, sondern dass durch eine oszillierende horizontale Bewegung einer Auflageebene einer Beladestation früher als bisher mit dem Überschieben der Artikellage begonnen werden kann als dies bisher der Fall war. Zudem kann ein abschließender Teil der Überschubbewegung wahlweise auch im Bereich der Beladestation durchgeführt werden, während diese bereits eine vertikale Hubbewegung zur Platzierung der überschobenen Artikellage an einem Ablageplatz einleitet.

Es sei an dieser Stelle betont, dass in der nachfolgenden Beschreibung und in den Ansprüchen die Begriffe Bereitstellungsstation, Beladestation und Transferstation der Einfachheit halber auch durch den Begriff des Moduls bzw. Fördermoduls ersetzt sind. Jeder dieser genannten Stationen ist mindestens eine Auflagefläche oder Auflageebene zugeordnet, welche zum Aufnehmen einer Artikellage geeignet ist. So kann beispielsweise die Auflageebene oder Auflagefläche der Beladestation aus zwei Teilen bestehen. Die Auflageebene oder Auflageflächen der Bereitstellungsstation und/oder der Transferstation sind jedoch meist einteilig ausgebildet. Zudem wäre es denkbar, dass jede der Auflageflächen oder Auflageebenen auch durch angetriebene umlaufende Mattenketten- oder Rollenförderer o. dgl. gebildet ist.

Die Erfindung schlägt zur Erreichung der genannten Ziele einerseits ein Verfahren zur horizontalen Überführung oder Verschiebung von Artikelgruppen oder Artikellagen von einer ersten Auflagefläche oder Auflageebene eines ersten Fördermoduls auf eine zweite, vertikal bewegliche Auflagefläche oder zweite Auflageebene eines dem ersten Modul in einer Förderrichtung unmittelbar nachgeordneten zweiten Fördermoduls vor. Die Überführung erfolgt mittels eines geeigneten Überschubrahmens, mit dem die Artikelgruppe oder Artikellage zwischen den beiden, zumindest während der Überschubbewegung annähernd fluchtenden Auflageebenen der beiden Fördermodule in Förderrichtung überführt werden kann. Da dieser Überschubrahmen die zu verschiebenden Artikelgruppen oder Artikellagen jeweils allseitig umgreift, können keine einzelnen Artikel umfallen oder aus dem Lagenverbund verrutschen. Mittels der Überschubbewegungen der Artikelgruppen oder Artikellagen können bspw. Wartezeiten des zweiten Fördermoduls reduziert werden, da eine Hebe- oder Senkbewegung der Fördermodule bereits begonnen werden können, während noch überschoben wird. Eine bisher unumgängliche Wartezeit, bis die Überschubeinrichtung bzw. ein sog. Lagenschieber wieder in Richtung zu ihrer/seiner anderen Endlage zurückgefahren und aus dem Kollisionsbereich mit dem zweiten Fördermodul bzw. der Beladestation gebracht wird, kann dadurch eingespart werden.

Die bereits während der abschließenden Phase der Überschubbewegung der Artikellage oder -gruppe durchführbare Vertikalbewegung des zweiten Fördermoduls bzw. dessen Auflageebene sorgt für eine Reduzierung bzw. Minimierung der erforderlichen Zeiten vom Überführen der Artikellagen bis zum Ablegen der Artikellagen und trägt somit zu einer zeitlichen Überscheidung bzw. Parallelität einzelner Verfahrensschritte bei, welche zum Palettieren von Artikellagen notwendig sind. Diese zeitliche und/oder prozessuale Überscheidung einzelner Verfahrensschritte spart Zeit und trägt somit erheblich zu einer Leistungserhöhung des davon beeinflussten Palettierverfahrens bei.

Bei einer Variante des erfindungsgemäßen Verfahrens ist es durchaus auch möglich, dass die erste Auflageebene des ersten Fördermoduls während der Überführung der Artikelgruppe oder Artikellage zumindest zeit- oder phasenweise in ihrem Höhenniveau gegenüber der zweiten Auflageebene des nachfolgenden zweiten Fördermoduls unter Ausbildung einer Stufe geringfügig höher oder tiefer liegt. In diesem Fall können die Artikel bspw. über eine kleine Rampe nach oben oder unten auf das nachfolgende zweite Modul geschoben werden. Diese Variante ermöglicht es, dass der Überschubvorgang ggf. noch früher begonnen werden kann, bevor die Auflageebenen vollständig miteinander fluchten, was wiederum Zeit für den Überschubvorgang und damit den gesamten Palettiervorgang einsparen kann. Selbstverständlich ist es auch möglich, dass die Auflageebenen bereits vor der Kontaktierung der zweiten Auflageebene mit den überschobenen Artikeln weitgehend miteinander fluchten und zu diesem Zweck das gleiche Höhenniveau erreicht haben.

Andererseits ermöglichen die verschiedenen Varianten des erfindungsgemäßen Verfahrens durch die aufeinander abgestimmte Bewegungssteuerung für die Vertikalbewegung zumindest der zweiten Auflageebene des dem ersten Fördermodul nachgeordneten zweiten Moduls, dass die Überführung der Artikelgruppe oder Artikellage von der ersten Auflageebene des ersten Moduls auf die zweite Auflageebene des zweiten Moduls unmittelbar vor einer Phase der Ausbildung der gemeinsamen Auflageebene der ersten und zweiten Auflageebenen oder gleichzeitig mit Erreichung dieser Phase gestartet wird. Da die zuvorderst stehenden Artikel einer vollständigen Artikellage normalerweise nicht am äußersten vorderen Rand der ersten Auflageebene stehen, kann die Überschubbewegung bereits begonnen werden, ohne dass bereits eine gemeinsame Auflageebene gebildet ist. Diese muss zumindest näherungsweise, ggf. unter Inkaufnahme einer leichten Stufe, erst dann gebildet sein, wenn die ersten Artikel tatsächlich die Grenze zwischen den beiden Auflageebenen passieren und auf die zweite Auflageebene des zweiten Moduls geschoben werden.

Im Zusammenhang der vorliegenden Erfindung ist es weiterhin wichtig, dass bei der erwähnten horizontalen Verschiebung der Artikelgruppe oder -lage die zwischen den aufeinander folgenden Auflageebenen die Relativpositionen einer die Artikelgruppe oder Artikellage bildenden Mehrzahl von Artikeln annähernd beibehalten werden. Die Verschiebung erfolgt deshalb mittels einer geeigneten Überschubeinrichtung, welche die Artikellage zwischen den beiden annähernd fluchtenden Auflageebenen der beiden Module in Förderrichtung verschieben kann. Die Überschubeinrichtung wird insbesondere durch einen horizontal im räumlichen Bereich der ersten und zweiten Fördermodule beweglichen Überschubrahmens gebildet, der in Förderrichtung vorderseitig und rückseitig an den zu überschiebenden Lagen angreift, d.h. an den jeweils zuvorderst und an den zuhinterst befindlichen Artikeln der überschobenen Lagen. Außerdem werden die überschobenen Lagen jeweils mit Leisten des Überschubrahmens seitlich kontaktiert. Zumindest das zweite Fördermodul kann vertikal positioniert werden, bspw. in Bezug auf eine Stapelhöhe von bereits übereinander abgelegten Artikellagen auf einem Stapelplatz. Die reduzierten Überschubzeiten und die bereits während des Überschubs durchführbaren Vertikalbewegungen zumindest des zweiten Fördermoduls sorgen für eine Minimierung der erforderlichen Transportzeiten und tragen zu einer Beschleunigung der erzielbaren Fördergeschwindigkeiten bei.

Um die zumindest temporär aufeinander abgestimmten Horizontal- und Vertikalbewegungen der Auflageebenen der ersten und zweiten Module zu erfassen, kann eine permanente Erfassung der aktuellen Vertikal- und/oder Horizontalpositionen der Auflageebenen sowie der Positionen der überschobenen Artikellagen sinnvoll sein, wobei die erfassten Werte zur Berechnung einer Annäherung zur Vorbereitung eines Überschubvorganges verarbeitet werden können. Das Ziel dieser Positionserfassung und Datenverarbeitung ist eine optimal aufeinander abgestimmte Bewegung der beiden Auflageebenen der aufeinander folgenden Module, so dass die Transferzeiten minimiert werden.

Das erste Modul kann bspw. durch eine Transfereinheit oder einen Transfertisch mit vertikal beweglicher Auflageebene gebildet sein, während das zweite Modul durch eine Beladestation gebildet sein kann, die ebenfalls eine vertikal bewegliche Auflageebene umfasst. Eine sinnvolle Steuervorschrift kann vorsehen, dass eine aktuelle Vertikalposition der Beladestation bzw. der zweiten Auflageebene des zweiten Moduls die Richtung einer Vertikalbewegung der Transfereinheit bzw. der ersten Auflageebene des ersten Moduls zur Annäherung der beiden Module bzw. ihrer Auflageebenen dominiert. Da im Zusammenhang der vorliegenden Erfindungsbeschreibung zudem von einem Gruppiersystem oder Gruppiertisch die Rede ist, der/das der Transferstation vorgeordnet ist, sei darauf hingewiesen, dass dieses Gruppiersystem oder dieser Gruppiertisch als drittes Fördermodul bezeichnet wird, wenn es auch dem ersten Fördermodul - dem Transfersystem - in Förderrichtung vorgeordnet ist. Die unterschiedlichen Nummerierungen bzw. Bezeichnungen der ersten, zweiten und dritten Fördermodule erleichtern allerdings das Verständnis der zusammenhängenden und aufeinander folgenden Prozessschritte; der Überschubrahmen bewegt sich nur zwischen dem ersten und dem zweiten Fördermodul, nicht jedoch in den Bereich des vorgeordneten dritten Fördermoduls (des Gruppiersystems).

Durch die allseitige Einwirkung des Überschubrahmens können Relativpositionen einer die Artikelgruppe bildenden Mehrzahl von Artikeln relativ zueinander weitgehend beibehalten werden; d.h. das Lagenbild der verschobenen Artikelgruppe bleibt dabei weitgehend aufrechterhalten. Wenn im vorliegenden Zusammenhang meist von Artikeln oder von Artikellagen die Rede ist, so können dies grundsätzlich die unterschiedlichsten Packgüter sein, bspw. einzelne Kartons, Getränkebehälter wie Flaschen, Dosen oder Getränkekartons, Stückgüter etc., die in vorgegebenen Anordnungen palettiert, gestapelt oder depalletiert werden können. Als Artikel kommen auch Gebinde in Frage, bspw. sog. Foliengebinde, Umreifungsgebinde o. dgl.

Wahlweise kann bei der Vorrichtung vorgesehen sein, dass den ersten und/oder zweiten Modulen jeweils Positionssensoren zur Erfassung der aktuellen Vertikal- und/oder Horizontalpositionen der ersten und zweiten Auflageebenen zugeordnet sind, deren Werte zur Berechnung einer Annäherung zur Vorbereitung eines Überschubvorganges verarbeitet werden können. Mit Hilfe dieser Sensoren können jederzeit die Vertikalpositionen und Horizontalpositionen der Auflageebenen bestimmt und in einer die Signale der Sensoren verarbeiteten Steuerung aufeinander abgestimmt werden, so dass beschleunigte Überschubbewegungen unter gleichzeitiger horizontaler Bewegung der zweiten Auflageebene und vertikaler Bewegung des die zweite Auflageebene tragenden zweiten Fördermoduls ermöglicht sind.

Das erste Modul kann bspw. durch eine Transfereinheit oder einen Transfertisch oder eine sog. Gruppierstation oder einen Gruppiertisch mit feststehendem oder ggf. auch vertikal beweglicher erster Auflageebene gebildet sein, während das zweite Modul bspw. durch eine Beladestation mit vertikal beweglicher zweiter Auflageebene gebildet sein kann. Das zweite Modul kann bspw. auch durch einen Aufzug und/oder einen Jalousiegreiferkopf oder ein anderes Hubwerk gebildet sein, das einen Höhenausgleich ermöglicht. Wenn im Zusammenhang der vorliegenden Erfindung von einem Höhenausgleich die Rede ist, so ist damit insbesondere eine Stapelmöglichkeit bei der Überführung der Artikellagen auf eines der Module gemeint. Da die Artikellagen bei der Palettierung in der Regel in mehreren Lagen übereinander gestapelt werden, muss zumindest das zweite Fördermodul eine Höhenverstellbarkeit aufweisen. Diese Höhenverstellbarkeit umfasst sowohl eine Absenkbarkeit nach unten zur Überführung der Artikellagen in einem unteren Niveau als auch eine Hebbarkeit über das Niveau des ersten Moduls bzw. der Gruppierstation, um die Artikellagen auf die Oberseite bereits zuvor übereinander gestapelter Artikellagen ablegen zu können. Entsprechendes gilt auch bei der Depalettierung, da ein zu depalettierender Stapel mit mehreren Artikellagen je nach Fortschritt der Entnahme allmählich kleiner wird und eine Höhenanpassung des übernehmenden Moduls erfordert.

Ergänzend sei darauf hingewiesen, dass die im vorliegenden Zusammenhang als Überschubeinrichtung bzw. als Überschubrahmen bezeichnete Vorrichtung zum Überführen der Artikellagen oder Artikelgruppen zwischen den ersten und zweiten Fördermodulen wahlweise auch durch hierfür vorbereitete Auflageebenen ergänzt sein können, bspw. durch deren Ausbildung als Horizontalfördereinrichtungen, Mattenketten o. dgl., mit deren Hilfe die darauf stehenden Artikelgruppen oder Artikellagen leichter in Förderrichtung auf nachgeordnete Förder- oder Auflageebenen weiterer Fördermodule überführt werden können. Dies betrifft gleichermaßen das dritte Fördermodul, dessen dritte Auflageebene ebenfalls durch eine entsprechende Mattenkette o. dgl. gebildet sein kann, um die Überführung der Artikellage auf das erste Fördermodul mittels der Überschubeinrichtung bzw. des Überschubbalkens zu erleichtern.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Fig. 1 zeigt insgesamt acht schematische Ansichten einer Überschubbewegung einer Artikellage zwischen benachbarten Fördermodulen.
Fig. 2 bis Fig. 6 zeigen in verschiedenen aufeinander folgenden schematischen Ansichten die Prozessschritte beim Überschub einer Artikellage zwischen benachbarten Modulen, die vertikal beweglich sind.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße Vorrichtung oder das erfindungsgemäße Verfahren ausgestaltet sein können und stellen keine abschließende Begrenzung dar.

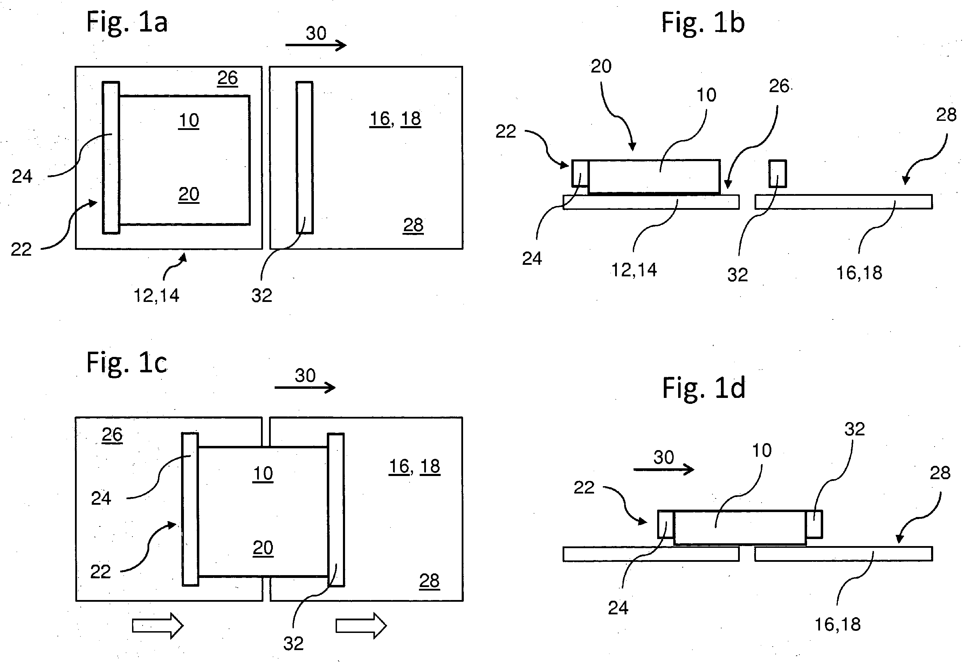

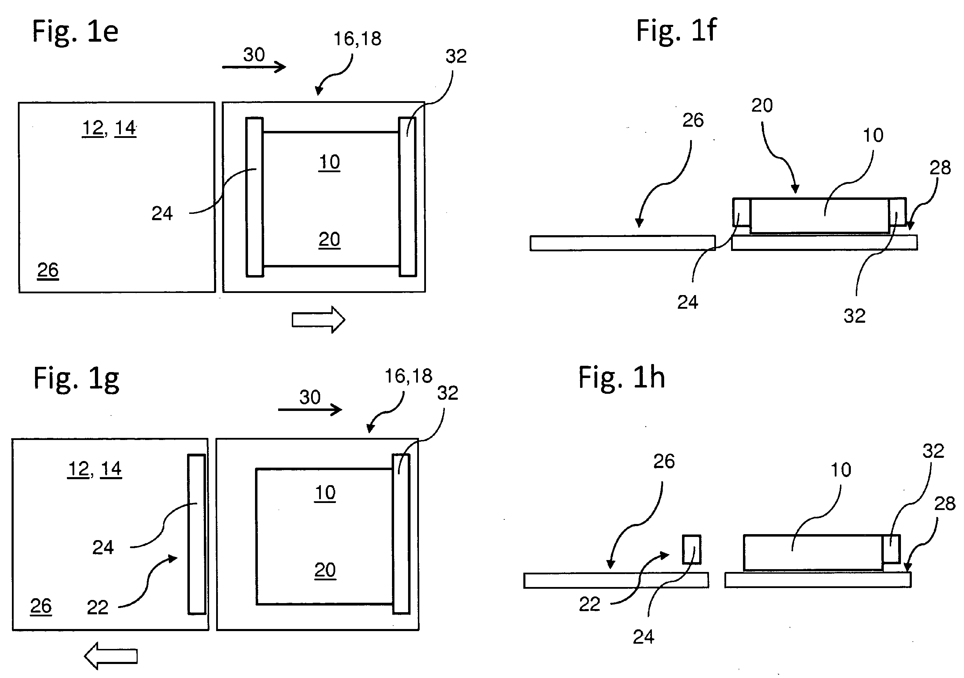

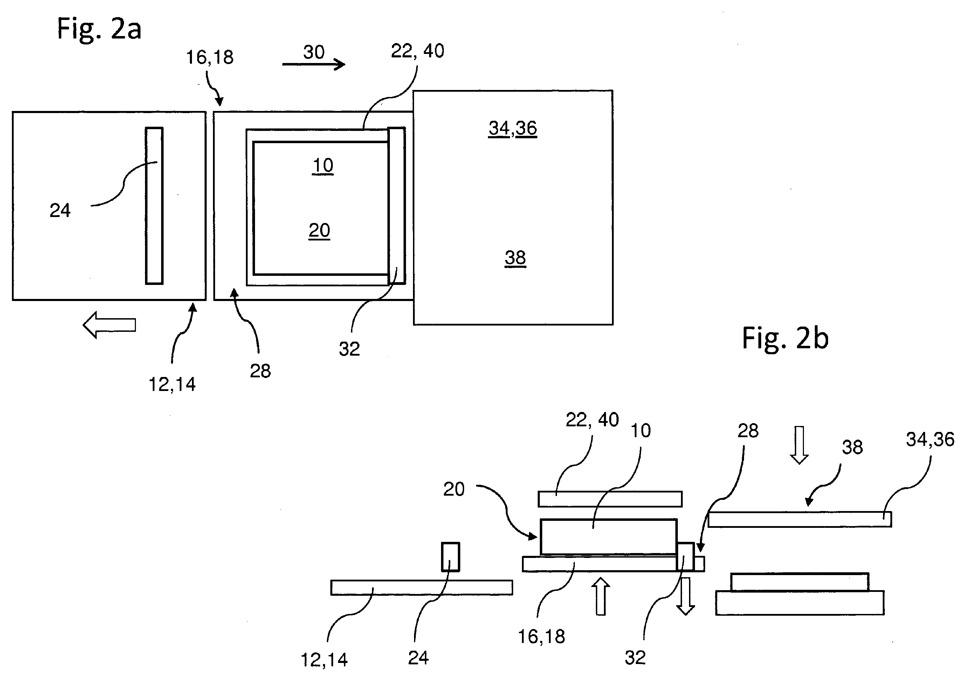

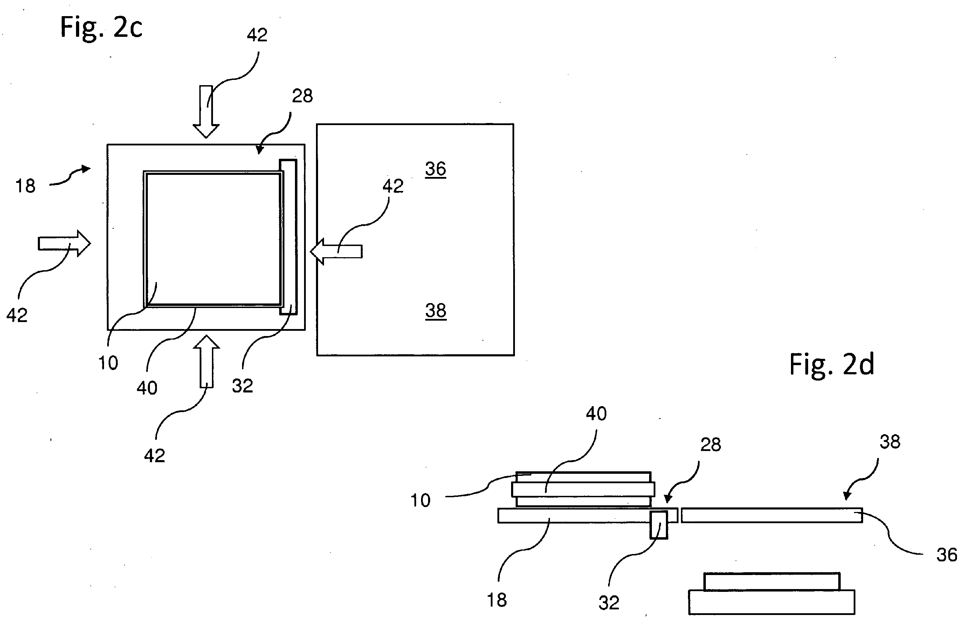

Die insgesamt acht schematischen Darstellungen (Seitenansichten und Draufsichten) der Fig. 1 verdeutlichen den Ablauf bei Überschubbewegungen von Artikelgruppen öder Artikellage 10 zwischen benachbarten Fördermodulen, während die folgenden Figuren 2 bis 6 in weiteren zahlreichen Ansichten die Prozessschritte beim Überschub der Artikellage auf ein weiteres, in Förderrichtung nachgeordnetes Fördermodul zeigen. Da die Darstellungen der Fig. 1 lediglich das bessere Verständnis des in den Figuren 2 bis 6 anhand eines Ausführungsbeispiels näher erläuterten erfindungsgemäßen Verfahrens erleichtern sollen, wird dort das jeweils rechts angeordnete Fördermodul als erstes Fördermodul 16 bezeichnet, während das jeweils links angeordnete Fördermodul als drittes Fördermodul 12 bezeichnet wird. Die weitere Verschiebung der Artikelgruppe oder Artikellage 10 mit Hilfe eines erfindungsgemäß eingesetzten Überschubrahmens 40, die sich unter Bezugnahme auf die Figuren 2 ff. näher erläutert findet, erfolgt somit vom ersten Fördermodul 16 (in Fig. 1 rechts angeordnet; in Fig. 2 ff. jeweils mittig bzw. links) auf das zweite Fördermodul 34 (in Fig. 1 nicht dargestellt; in Fig. 2 ff. jeweils rechts angeordnet). Aus diesem Grund wird bei der nachfolgenden Beschreibung der Figuren 1 a bis 1 h von einer Verschiebung der Artikellage 10 in Förderrichtung 30 (nach rechts) vom dritten Fördermodul 12 auf das erste Fördermodul 16 gesprochen. Die Logik dieser Nummerierung erschließt sich bei der weiteren Beschreibung der Überschubbewegungen der Artikellage 10 vom ersten Fördermodul 16 auf das zweite Fördermodul 34 (vgl. Figuren 2a bis 6d).

Die Fig. 1 zeigt in einer schematischen Draufsicht (Fig. 1a) und in einer schematischen Seitenansicht (Fig. 1 b) den Beginn einer horizontalen Verschiebung einer Artikelgruppe oder Artikellage 10 aus einer Startposition von einem dritten Fördermodul 12, bspw. von einem Gruppiertisch 14, der Teil eines Gruppiersystems sein kann, in Richtung zur einer Endposition auf einem ersten Fördermodul 16, das bspw. ein Hubmodul oder eine Transferstation 18 o. dgl. sein kann. Die Artikellage 10 umfasst im gezeigten Ausführungsbeispiel eine regelmäßige Anordnung einer Mehrzahl von Artikeln 20, die im Rechteckverbund stehen, wobei typischerweise keine oder nur minimale Abstände zwischen den einzelnen Artikeln 20 der jeweiligen Lage 10 vorhanden sind, so dass die gesamte Artikellage 10 weitgehend ohne Änderung des Lagenbildes mittels einer Überschubeinrichtung 22 in Gestalt eines Schubbalkens 24 o. dgl. von einer - normalerweise ortsfest angeordneten - dritten Auflageebene 26 des dritten Fördermoduls 12 bzw. des Gruppiertischs 14 auf eine - normalerweise in vertikaler Richtung hebbare und senkbare - erste Auflageebene 28 des ersten Fördermoduls 16 bzw. der Transferstation 18 geschoben werden kann. Die Artikel 20 können bspw. Kartons, Gebinde mit mehreren einzelnen Artikeln oder Behältern oder auch einzelne Behälter oder sonstige Stückgüter sein, die in regelmäßiger Anordnung nebeneinander stehen.

Der für die Verschiebung der Artikelgruppe oder Artikellage 10 verantwortliche Schubbalken 24 der Überschubeinrichtung 22, der jeweils in konstantem Abstand parallel zur dritten Auflageebene 26 in Förder- bzw. Überschubrichtung 30 bewegt wird, greift in Bezug auf die Förder- bzw. Überschubrichtung 30 rückseits an der Artikelgruppe 10 an. D.h. er greift an den zuhinterst stehenden Artikeln 20 der Artikelgruppe oder Artikellage 10 an und verschiebt dadurch die gesamte Artikelgruppe oder Artikellage 10, die ggf. zur Aufrechterhaltung des Lagenbildes seitlich geführt sein kann, was in den Figuren 1a bis 1 h jedoch der Einfachheit und der besseren Übersichtlichkeit halber nicht dargestellt ist. Eine hier ebenfalls nicht dargestellte Rückhubbewegung des Schubbalkens 24 in seine Ausgangsposition zur Überführung einer weiteren Artikellage 10 von der Startposition (Fig. 1a, Fig. 1b) kann wahlweise in selber Höhe, d.h. knapp oberhalb der dritten Auflageebene 26 des dritten Fördermoduls 12 oder des Gruppiertischs 14 erfolgen. Um dabei jedoch nicht mit einer folgenden Artikellage 10 zu kollidieren, erfolgt die Rückführung des Schubbalkens 24 in die in Fig. 1b gezeigte Ausgangsposition zweckmäßigerweise oberhalb oder unterhalb der Förderebene, insbesondere oberhalb des Transportniveaus der Artikel 20 der Artikellage 10, wobei ggf. zwei oder mehr gleichartige Schubbalken 24 mittels seitlicher Führungen (nicht dargestellt) angetrieben werden können, so dass sie endlos umlaufende Vorschub- und Rückhubbewegungen ausführen und dabei in kurzen Abständen folgende Artikellagen 10 ohne nennenswerte Verzögerungen in Überschubrichtung 30 auf das erste Fördermodul 16 überschieben können.

Dem ersten Fördermodul 16 bzw. der Transferstation 18 ist ein Anlagebalken 32 zugeordnet, der die Artikellage 10 bei der Überschubbewegung bis in die Zielposition, ungefähr in der Mitte der ersten Auflageebene 28 des ersten Fördermoduls 16, stabilisieren kann, wie dies in den Figuren 1 c, 1 d, 1 e und 1f gezeigt ist. Der in Förderrichtung 30 rückseitig an der Artikellage 10 angreifende Schubbalken 24 fährt in seiner Schubbewegung in Förder- bzw. Überschubrichtung 30 bis in den Bereich des ersten Fördermoduls 16 hinein, wie dies in den Figuren 1 e und 1f gezeigt ist, bevor er wieder in den Bereich des dritten Fördermoduls 12 zurückfährt (Fig. 1g und Fig. 1h). Wie erwähnt, kann diese Rückfahrbewegung oder Rückhubbewegung des Schubbalkens 24 der Überschubeinrichtung 22 entsprechend Fig. 1g und Fig. 1h in unveränderter Höhe oder wahlweise oberhalb oder unterhalb der Transporthöhe der Artikellage 10 erfolgen.

Durch die rückseitige Einwirkung des Schubbalkens 24 an der zu verschiebenden Artikellage 10 und durch die gezeigte frontseitige Einwirkung des Anlagebalkens 32 können die Relativpositionen der die Artikelgruppe 10 bildenden Mehrzahl von Artikeln 20 relativ zueinander weitgehend beibehalten werden; d.h. das Lagenbild der verschobenen Artikelgruppe 10 bleibt entlang der Vorschubbewegung 30 weitgehend aufrechterhalten. Da die Artikel 20 der überschobenen Artikellage 10 solchermaßen stabilisiert werden, können die dritten und ersten Fördermodule 14, 16 wahlweise während der Überschubbewegung gehoben oder gesenkt werden, wobei diese Hubbewegungen jeweils synchron erfolgen müssen, damit zwischen der dritten Auflageebene 26 des Gruppiertischs 14 und der ersten Auflageebene 28 der Transferstation 18 kein Absatz gebildet ist, an der die Artikellage 10 instabil werden oder hängenbleiben könnte. Normalerweise jedoch verfügt der Gruppiertisch 14, der das dritte Fördermodul 12 bilden kann, über keine vertikale Beweglichkeit, da er sich üblicherweise nach links, d.h. entgegen der Förderrichtung 30 an eine Horizontalfördereinrichtung zur Anförderung der Artikel 20 anschließt, die in einem konstanten Höhenniveau von der (hier nicht gezeigten) Horizontalfördereinrichtung auf den Gruppiertisch 14 überführt werden. Die Transferstation 18 jedoch, die das erste Fördermodul 16 bilden kann, ist üblicherweise mit einem Hubwerk ausgestattet, das für eine vertikale Heb- und Senkbarkeit sorgen kann, sobald die Artikellage 10 vollständig überschoben wurde und sobald die Überschubeinrichtung 22 ggf. aus einem Kollisionsbereich mit dem ersten Fördermodul 16 entfernt wurde (vgl. z.B. Fig. 1 g und Fig. 1 h).

Während ein sich unmittelbar an das erste Fördermodul 16 bzw. die Transferstation 18 anschließendes zweites Fördermodul in den Figuren 1a bis 1 h der besseren Übersichtlichkeit halber noch nicht dargestellt ist, da nur derjenige Teil eines gesamten Überschubvorganges dargestellt ist, der zwischen dem (hier so genannten) dritten Fördermodul 12 bzw. dem Gruppiertisch 14 und dem (hier so bezeichneten) ersten Fördermodul 16 bzw. der Transferstation 18 erfolgt, zeigen die meisten der folgenden Figuren 2a bis 6d zumindest die ersten und zweiten Fördermodule 16, 34 und teilweise auch das (davon links angeordnete) dritte Fördermodul 12, sofern dies für die exakte Erläuterung der Überführungsbewegung der Artikellagen 10 zwischen den verschiedenen Fördermodulen von Vorteil ist und das Verständnis erleichtert.

Die Figuren 2a und 2b verdeutlichen den weiteren Verlauf der in den Figuren 1 a bis 1 h für den Bereich der ersten und dritten Fördermodule 16 und 12 begonnenen Überschubsituation, bei dem die Artikellage 10 vom ersten Fördermodul 16 bzw. der Transferstation 18 in Förder- bzw. Überschubrichtung 30 auf ein nachgeordnetes zweites Fördermodul 34 überschoben wird. Das zweite Fördermodul 34 kann bspw. durch eine sog. Beladestation 36 gebildet sein, die eine zweite Auflageebene 38 zur Aufnahme der gesamten Artikellage 10 aufweist, die während des Überschubvorganges annähernd mit der ersten Auflageebene 28 des ersten Fördermoduls 16 fluchtet.

Im gezeigten Ausführungsbeispiel sind sowohl das erste Fördermodul 16 bzw. die Transferstation 18 als auch das zweite Fördermodul 34 bzw. die Beladestation 36 jeweils über vorzugsweise separat steuerbare Hubwerke heb- und senkbar, wobei die Figuren 2a und 2b eine Phase des Überschubvorganges zeigen, bei der das der Transferstation 18 zugeordnete Hubwerk dafür sorgt, dass deren erste Auflageebene 28 auf das Niveau der zweiten Auflageebene 38 der Beladestation 36 gehoben wird. Der räumlich dem ersten Fördermodul 16 bzw. der Transferstation 18 zugeordnete Gegenhalte- oder Anlagebalken 32 wird gleichzeitig unterhalb der ersten Auflageebene 28 der Transferstation 18 abgesenkt, sobald sich die Transferstation 18 und die Beladestation 36 dem Überschubniveau annähern, das in den Figuren 2c und 2d veranschaulicht wird. Falls sich unter der Beladestation 36 noch ein Freiraum befindet, kann die Beladestation 36 wahlweise abgesenkt werden und damit der gleichzeitig angehobenen Transferstation 18 entgegenfahren. Wie es die schematische Seitenansicht der Fig. 2b erkennen lässt, befindet sich oberhalb der ersten Auflageebene 28 der Transferstation 18 und oberhalb der Förderhöhe der Artikellage 10 ein zwischen der Transferstation 18 und der Beladestation 36 bewegbarer Überschubrahmen 40, der über die Artikellage 10 abgesenkt werden kann, sobald diese ihre Zielposition auf der ersten Auflageebene 28 der Transferstation 18 erreicht hat. Im folgenden Zusammenhang wird auch der zwischen dem ersten Fördermodul 16 und dem zweiten Fördermodul 34 bewegbare Überschubrahmen 40 allgemein als Überführungs- bzw. Überschubeinrichtung 22 bezeichnet (vgl. auch Fig. 2a, Fig. 2b), wenn auch in der weiteren Beschreibung in erster Linie die konkretere Bezeichnung des Überschubrahmens 40 verwendet wird.

Wahlweise kann der Überschubrahmen 40 der Beladestation 36 zugeordnet sein und deshalb hinsichtlich seiner vertikalen Beweglichkeit mit dem Hubwerk der Beladestation 36 verbunden sein. Allerdings kann der Überschubrahmen 40 je nach Ausgestaltung der Gesamtanordnung auch über ein ihm zugeordnetes eigenes Hubwerk verfügen. In der Darstellung der Fig. 2b steht der Überschubrahmen 40 auf der Seite der Transferstation 18 und wartet dort auf die Artikellage 10. Die hier nicht gezeigten Zentrier- oder seitlichen Führungseinrichtungen der Transferstation 18 in Einlaufposition müssen sinnvollerweise niedriger angeordnet sein als die tiefste Betriebslage des Überschubrahmens 40, wenn dieser in Richtung der ersten Auflageebene 28 der Transferstation 18 abgesenkt wird. Der dem Gruppiertisch 14 zugeordnete Schieber bzw. Schubbalken 24 fährt in Richtung der Einlaufposition der Gebinde oder Artikel 20 zurück. Der Bereich des Gruppiertischs 14 bzw. des Gruppiersystems soll bei den weiteren Schritten nicht mehr betrachtet werden, da es nachfolgend um den Überschub von der Transferstation 18 auf die nachgeordnete Beladestation 36 geht. Der Gegenhaltebalken oder sog. Anlagebalken 32 der Beladestation 18 befindet sich in einer Position hinter der Artikellage 10, so dass er für deren exakte Positionierung sorgen und verhindern kann, dass ggf. einzelne der zuvorderst befindlichen Artikel umfallen oder verrutschen können, insbesondere wenn die Artikellage 10 mit relativ hoher Vorschubgeschwindigkeit überführt wird.

Die Figuren 2c und 2d verdeutlichen einen folgenden Verfahrensschritt, bei dem das Hubwerk der Transferstation 18 dieses soweit angehoben hat, während das Hubwerk der Beladestation 36 diese soweit abgesenkt hat, dass deren erste und zweite Auflageebenen 28 und 38 ein gemeinsames Überschubniveau bilden. Der Gegenhaltebalken 32 ist in der Transferstation 18 abgesenkt, so dass er sich unterhalb der ersten Auflageebene 28 befindet. Der Überschubrahmen 40 der Beladestation 36 kann mit dem Überschub der Artikellage 10 auf die Beladestation 36 beginnen und die Lage gleichzeitig zentrieren und die jeweilige räumliche Zuordnung und die Positionen der Artikel 20 zueinander beibehalten. Ggf. vorhandene zusätzliche Zentriermittel oder Zentriereinrichtungen - hier angedeutet durch die Richtungspfeile 42 in Fig. 2c - der Transferstation 18 in der Einlaufposition sind wiederum niedriger angeordnet als der Überschubrahmen 40 der Beladestation 36.

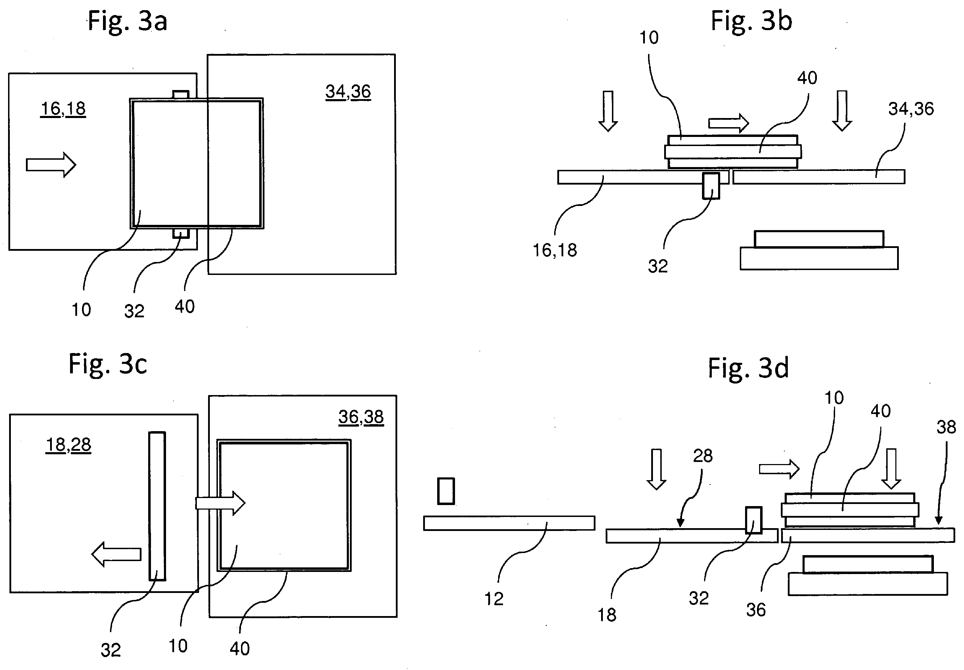

Der in den Figuren 3a und 3b gezeigte folgende Verfahrensschritt verdeutlicht die in selber Höhe befindlichen ersten und zweiten Fördermodule 16 und 34, gebildet durch die Transferstation 18 und die auf demselben Überschubniveau stehende Beladestation 36. Die beiden Stationen 18 und 36 können wahlweise zur Erzielung eines Zeitgewinns gemeinsam und in synchronen Bewegungen in Richtung zur Abgabeposition bewegt werden. Der Gegenhaltebalken 32 ist in der Transferstation 18 abgesenkt. Der Überschubrahmen 40 der Beladestation 36 schiebt die Lage 10 auf die Beladestation 36 und sorgt gleichzeitig dafür, dass die Lage 10 zentriert bleibt. Der Zentriervorgang (vgl. Fig. 2c) kann auch parallel zum Überschubvorgang erfolgen, da die Lage 10 beim Überschubstart normalerweise noch von der Zentrierung der Transferstation 18 geführt wird. Die Zentrierung der Transferstation 18 ist in Einlaufposition niedriger angeordnet als der Überschubrahmen 40 der Beladestation 36.

Der in den Figuren 3c und 3d gezeigte folgende Verfahrensschritt verdeutlicht die Positionen der Transferstation 18 und der auf demselben Überschubniveau stehenden Beladestation 36. Wie erwähnt, können die beiden Stationen 18 und 36 auch gemeinsam in Richtung der Abgabeposition synchron fahren. Der Gegenhaltebalken 32 fährt in Richtung zur Aufnahmeposition für die nächste Lage 10, da die überschobene Artikellage 10 die erste Auflageebene 28 bereits verlassen und somit den Gegenhalte- oder Anlagebalken 32 schon passiert hat. Der Überschubrahmen 40 der Beladestation 36 schiebt die Lage 10 auf die Beladestation 36 und hat den Bereich der Transferstation 18 bereits verlassen. In dieser Position können die Hubbewegungen der Transferstation 18 und der Beladestation 36 bereits unabhängig voneinander verlaufen, da kein gemeinsames Überschubniveau der ersten und zweiten Auflageebenen 28 und 38 mehr benötigt wird.

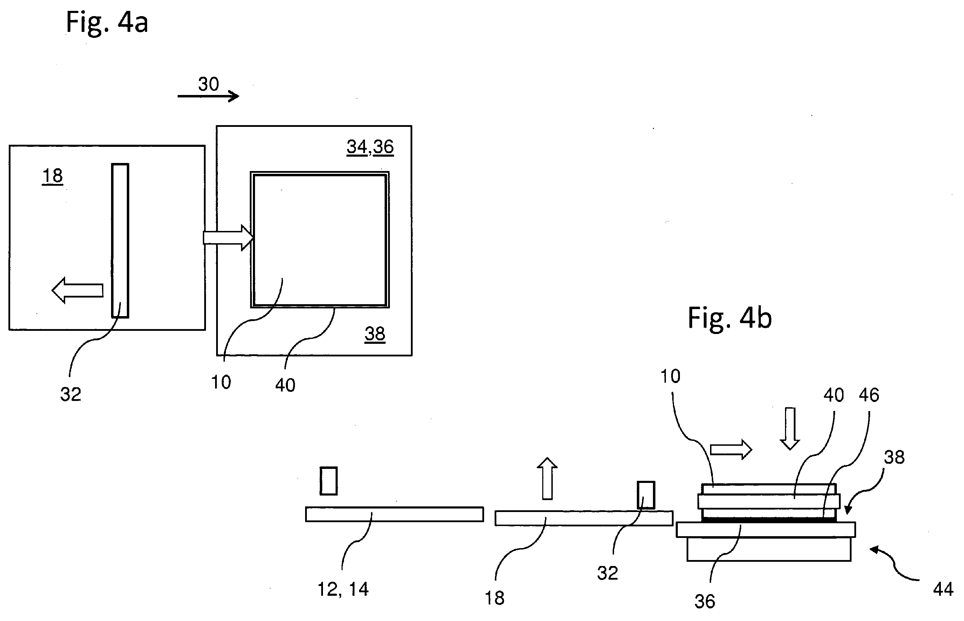

Die Figuren 4a und 4b verdeutlichen in zwei schematischen Ansichten (Fig. 4a: Draufsicht; Fig. 4b: Seitenansicht), wie die Transferstation 18 wieder angehoben werden kann, um auf das Höhenniveau des Gruppiersystems 14 zurückzukehren. Der Gegenhaltebalken oder Anlagebalken 32 fährt in Richtung zur Aufnahmeposition für die nächste Lage, wird also gegen die Förderrichtung 30 bewegt, da die überschobene Artikellage 10 (Fig. 3c, Fig. 3d) diesen schon passiert hat. Der Überschubrahmen 40 der Beladestation 36 erreicht mit der von ihm umfassten Artikellage 10 die Abgabeposition, die gleichzeitig seine Zielposition bildet. Wenn das Hubwerk die Beladestation 36 soweit abgesenkt hat, dass sich diese ebenfalls in Abgabeposition befindet, kann die Artikellage 10 auf einen Stapelplatz 44 abgegeben werden, der bspw. durch eine Palette 46 o. dgl. gebildet sein kann, auf der mehrerer Artikellagen 10 übereinander gestapelt werden können, um später gemeinsam abtransportiert zu werden (vgl. Fig. 4b). Der Absetzvorgang der gesamten Artikellage 10 auf der Palette 46 bzw. auf einer Oberseite einer dort zuvor bereits abgesetzten Artikellage 10 kann üblicherweise durch eine geeignete Gestaltung einer unteren Auflageebene erfolgen, in diesem Fall der zweiten Auflageebene 38 des zweiten Fördermoduls 34, gebildet durch die Beladestation 36. Diese kann bspw. als sog. Jalousiekopf oder Plattengreiferkopf o. dgl. ausgebildet sein, dessen Boden durch Auseinanderziehen zweier Bodenhälften oder durch einseitiges Verschieben des Bodenbereichs geöffnet werden kann, um die auf dem Boden stehende und in der Beladestation 36 befindliche Artikellage 10 auf dem Stapelplatz 44 bzw. auf der Palette 46 abzusetzen.

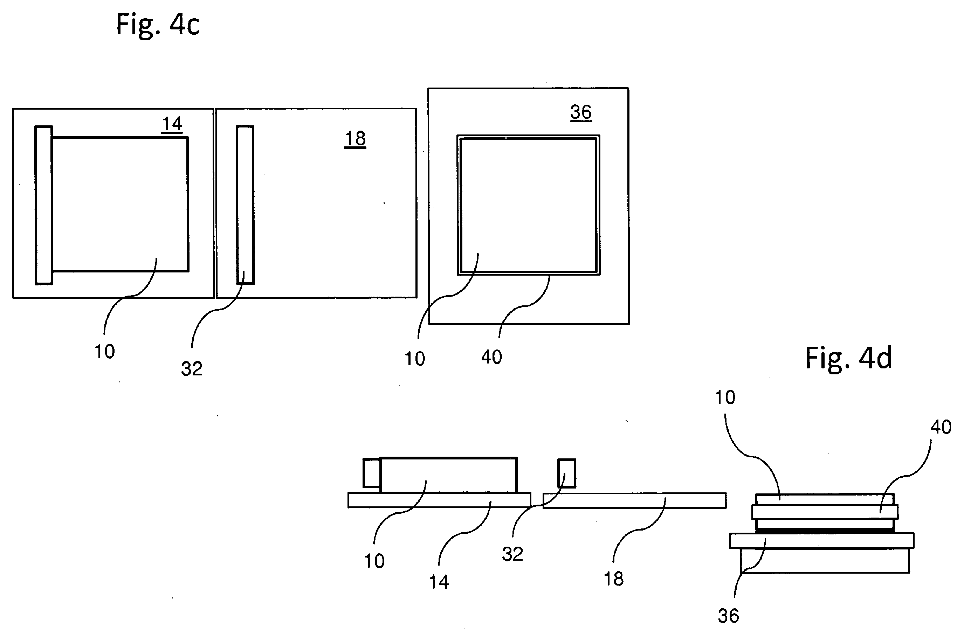

Die folgenden Figuren 4c und 4d zeigen, wie die Transferstation 18 wieder in ihre Aufnahmeposition zur Übernahme der nächsten Artikellage 10 in das gemeinsame Überschubniveau mit dem Gruppiersystem 14 gebracht ist. Der Gegenhaltebalken 32 steht in der Aufnahmeposition für die nächste Lage 10, in unmittelbarer Nähe zum Gruppiertisch 14. Der Überschubrahmen 40 der Beladestation 36 kann sich hierbei noch immer mit der Artikellage 10 in der zuvor erreichten Abgabeposition befinden.

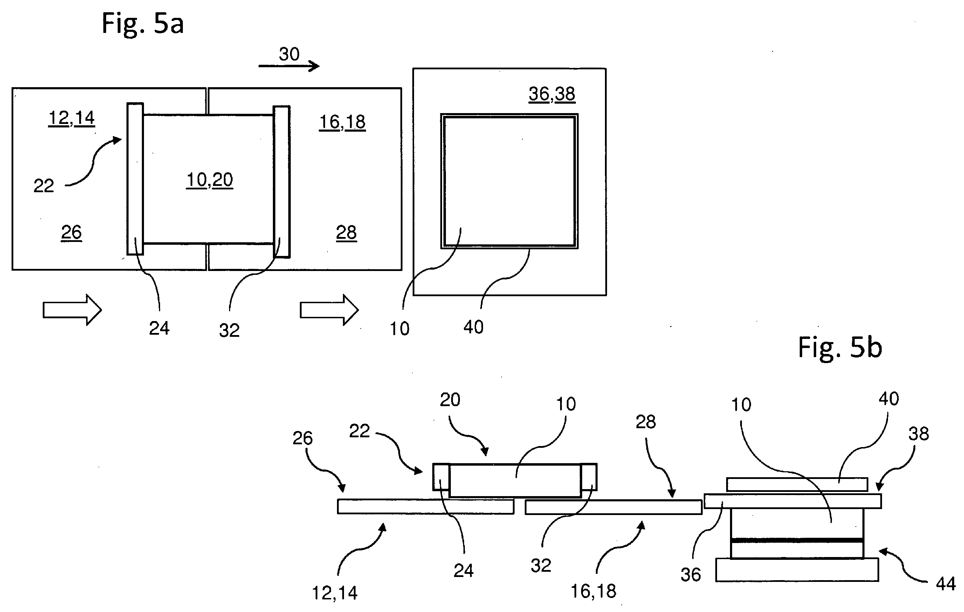

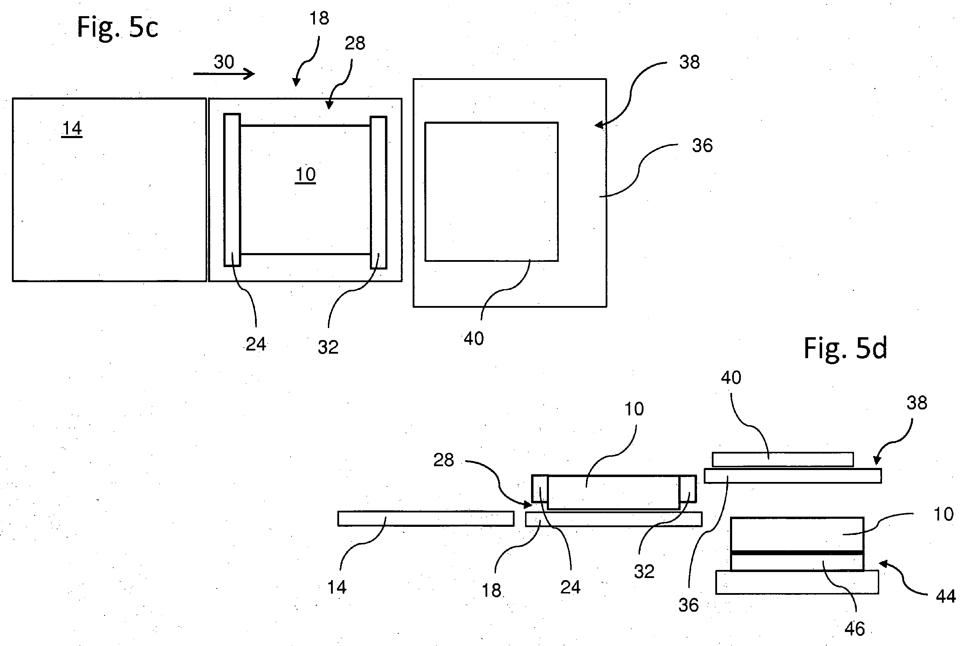

Die Figuren 5a und 5b verdeutlichen die auf demselben Überschubniveau stehenden dritten und ersten Auflageebenen 26 und 28 der dritten und ersten Fördermodule 12 und 16, hier gebildet durch den normalerweise ortsfesten Gruppiertisch 14 und die vertikal bewegliche Transferstation 18. Die folgende Artikellage 10 wird mit der Überschubeinrichtung 22 vom Gruppiersystem 14 auf die Transferstation 18 überführt, indem der Schieber 24 des Gruppiersystems 14 in Überschubrichtung 30 zur Transferstation 18 bewegt wird. Der Gegenhaltebalken 32 der Transferstation 18 arbeitet gleichzeitig als Gegenhaltebalken vor der Lage 10 und sichert diese gegen umfallende Gebinde oder Artikel 20. Der Schieber 24 und der Gegenhaltebalken 32 fahren hierbei nach erfolgtem Aufsynchronisieren des Gegenhaltebalkens 32 mit synchronen Geschwindigkeiten. Auch hierbei ist wieder die Zentrierung der Transferstation 18 in der Einlaufposition niedriger angeordnet als der Überschubrahmen 40 der Beladestation 36 später. Der Überschubrahmen 40 der Beladestation 36 steht noch immer mit der auf dem Stapelplatz 44 abgesetzten Artikellage 10 in der Abgabeposition. Allerdings hat die Beladestation 36 durch ihren vorzugsweise öffenbaren oder auf sonstige Weise die Artikellage 10 freigebenden Boden bzw. die seitlich entfernbare zweite Auflageebene 38 die Artikellage 10 freigegeben und kann deshalb ohne weitere Berührung mit der Artikellage 10 über deren Ruhelage angehoben werden, so dass die Beladestation 36 aus dem Kontaktbereich mit der abgesetzten Artikellage 10 gehoben werden kann, wie dies in Fig. 5b erkennbar ist (vgl. hierzu auch Fig. 5d).

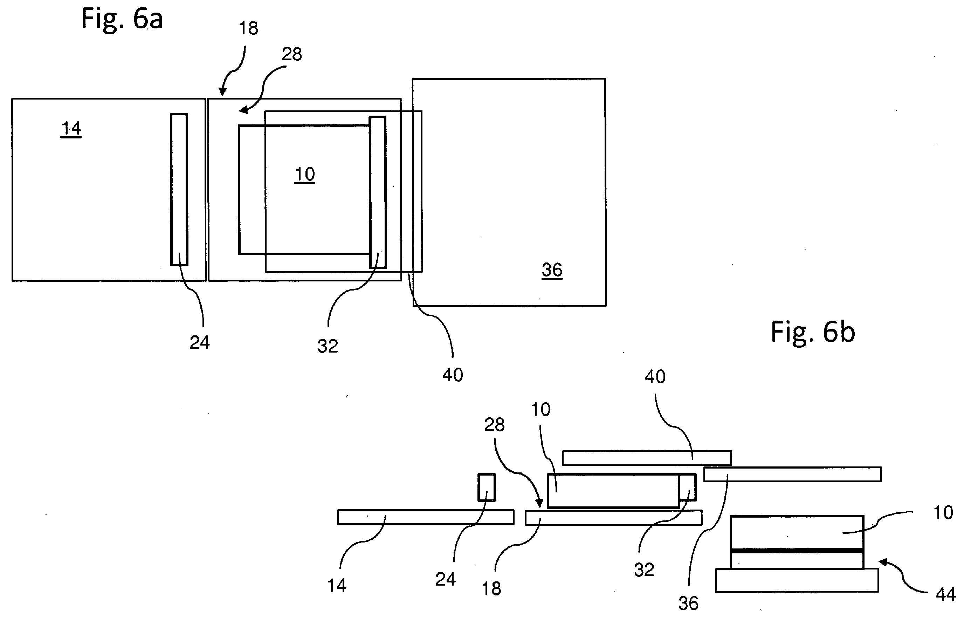

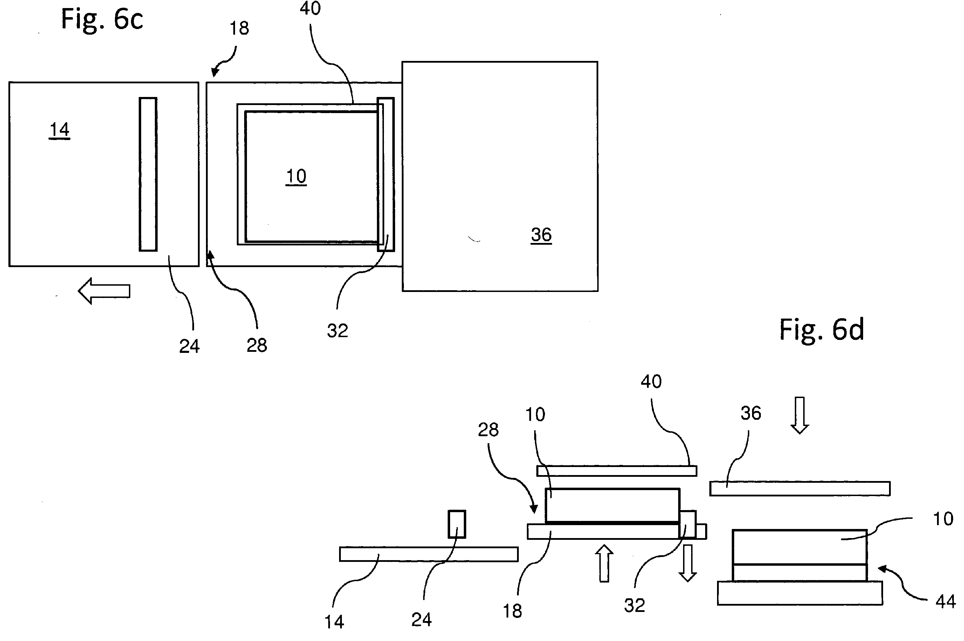

Die Figuren 5c und 5d verdeutlichen weiterhin, dass das die Transferstation 18 sich noch immer auf dem Überschubniveau des Gruppiersystems 14 befindet, auch wenn die Artikellage 10 bereits vom Gruppiersystem 14 mittels des Schiebers 24 des Gruppiersystems 14 auf die Transferstation 18 übergeschoben wurde. Der Gegenhaltebalken 32 der Transferstation 18 befindet sich in seiner Endposition am rechten Rand der ersten Auflageebene 28 und in Nähe zur Beladestation 36. Auch der Schieber 24 des Gruppiersystems 14 hat seine Überschubposition erreicht. Die Beladestation 36 ist soweit angehoben, dass die zuvor auf der Palette 46 abgesetzte Lage 10 freigefahren ist; der Jalousieboden oder die entsprechende Einrichtung der zweiten Auflageebene 38 kann wieder schließen. Der Überschubrahmen 40 der Beladestation 36 fährt in Richtung der Aufnahmeposition auf die Seite der Transferstation 18, was als beginnende Bewegung entgegengesetzt zur Überschubrichtung 30 in Fig. 5c und Fig. 5d angedeutet ist. Die Übernahmeposition oberhalb der ersten Auflageebene 28 hat der Überschubrahmen 40 in den Darstellungen der Figuren 6a und 6b beinahe erreicht. In den Darstellungen der Figuren 6a und 6b befindet sich die Transferstation 18 noch immer auf dem Überschubniveau des Gruppiersystems 14. Der Schieber 24 des Gruppiersystem 14 fährt dagegen wieder zurück, während der Gegenhaltebalken 32 der Transferstation 18 vor der Artikellage 10 steht, bevor er unter das Niveau der ersten Auflageebene 28 abgesenkt wird (vgl. Fig. 6d). Die Beladestation 36 muss angehoben werden, um beim folgenden Überschubvorgang außerhalb des Kollisionsbereichs mit den bereits auf dem Stapelplatz 44 befindlichen Artikellagen 10 zu bleiben. Der Überschubrahmen 40 der Beladestation 36 fährt in Richtung der Aufnahmeposition auf die Seite der Transferstation 18, um auf die dort stehende Artikellage 10 abgesenkt werden zu können, sobald er seine entsprechende Position erreicht hat (vgl. Fig. 6c).

Die Figuren 6c und 6d zeigen schließlich eine Position entsprechend den Figuren 2a und 2b mit dem Unterschied, dass schon eine Lage 10 auf dem Stapelplatz 44 abgesetzt ist. Das Hubwerk der Transferstation 18 hebt diese auf das Niveau der Beladestation 36, um die auf der Transferstation 18 stehende Artikellage 10 auf die Beladestation 36 überschieben zu können. Der Gegenhaltebalken 32 wird in die Transferstation 18, d.h. unterhalb des Niveaus der ersten Auflageebene 28 abgesenkt, sobald sich die Transferstation 18 und die Beladestation 36 dem Überschubniveau annähern. Falls unter der Beladestation 36 noch ein ausreichender Freiraum ist, kann die Beladestation 36 auch der Transferstation 18 entgegengefahren werden. Der Überschubrahmen 40 der Beladestation 36 steht auf der Seite der Transferstation 18 und wartet dort auf die Lage 10, um sie auf die Beladestation 36 zu überführen. Der Schieber 24 des Gruppiersystems 14 fährt wieder in Richtung der Einlaufposition der Gebinde zurück.

Die weiteren Verfahrensschritte beim erneuten Überschieben von weiteren Artikellagen 10 wiederholen sich in der gezeigten Weise.

Abschließend kann erwähnt werden, dass die im vorliegenden Zusammenhang als Überschubeinrichtung 22 bzw. Überschubrahmen 40 bezeichnete Vorrichtung zum Überführen der Artikellagen 10 oder Artikelgruppen zwischen den ersten und zweiten Fördermodulen 16, 34 wahlweise auch durch hierfür vorbereitete Auflageebenen 28 und 38 ergänzt sein können, bspw. durch deren Ausbildung als Horizontalfördereinrichtungen, Mattenketten o. dgl., mit deren Hilfe die darauf stehenden Artikelgruppen oder Artikellagen 10 leichter in Förderrichtung 30 auf nachgeordnete Förder- oder Auflageebenen weiterer Fördermodule überführt werden können. Dies betrifft gleichermaßen das dritte Fördermodul 12 (vgl. Fig. 1), dessen Auflageebene 26 ebenfalls durch eine entsprechende Mattenkette o. dgl. gebildet sein kann, um die Überführung der Artikellage 10 auf das erste Fördermodul 16 mittels der Überschubeinrichtung 22 bzw. des Überschubbalkens 24 zu erleichtern.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 10: Artikellage, Artikelgruppe
- 12: drittes Fördermodul
- 14: Gruppiertisch
- 16: erstes Fördermodul
- 18: Transferstation
- 20: Artikel, Gebinde, Behälter
- 22: Überführungseinrichtung, Überschubeinrichtung
- 24: Schubbalken
- 26: dritte Auflageebene (des dritten Fördermoduls)
- 28: erste Auflageebene (des ersten Fördermoduls)
- 30: Vorschubbewegung, Überschubbewegung, Förderrichtung, Überschubrichtung
- 32: Anlagebalken, Gegenhaltebalken
- 34: zweites Fördermodul
- 36: Beladestation
- 38: zweite Auflageebene (des zweiten Fördermoduls)
- 40: Überschubrahmen
- 42: Zentriereinrichtung
- 44: Stapelplatz
- 46: Palette

## Patentansprüche

1. Verfahren zur horizontalen Verschiebung von Artikelgruppen oder Artikellagen (10) von einer vertikal beweglichen ersten Auflageebene (28) eines ersten Fördermoduls (16) auf eine vertikal bewegliche zweite Auflageebene (38) eines dem ersten Fördermodul (16) in einer Förder- oder Überschubrichtung (30) unmittelbar nachgeordneten zweiten Fördermoduls (34) mittels wenigstens einer rahmenartigen Überschubeinrichtung (22, 40), wobei die Auflageebenen (28, 38) der ersten und zweiten Fördermodule (16, 34) zumindest während der Überschubbewegung eine gemeinsame, in etwa auf gleicher Höhe befindliche oder gleichsinnig vertikal bewegte Überschubfläche bilden,
**dadurch gekennzeichnet, dass** die Überschubeinrichtung (22, 40) über die zu verschiebende Artikelgruppe oder Artikellage (10) abgesenkt wird und diese allseitig umgreift und sich während der Überschubbewegung einer Artikelgruppe oder Artikellage (10) in Förder- oder Überschubrichtung (30) vom ersten Fördermodul (16) zum zweiten Fördermodul (34) bewegt.

2. Verfahren nach Anspruch 1, bei dem die Überschubeinrichtung (22) durch einen vertikal und horizontal beweglichen Überschubrahmen (40) gebildet ist, der von oben über eine auf dem ersten Fördermodul (16) stehende Artikelgruppe oder Artikellage (10) geschoben wird.

3. Verfahren nach Anspruch 1 oder 2, bei dem die Überschubeinrichtung (22) bzw. der Überschubrahmen (40) die zu verschiebende Artikelgruppe oder Artikellage (10) in horizontaler Richtung entlang der Überschubfläche auf das zweite Fördermodul (34) schiebt und anschließend von dort nach oben von der verschobenen Artikelgruppe oder Artikellage (10) abgehoben wird.

4. Verfahren nach einem der Ansprüche 1 bis 3, bei dem die Größe des Überschubrahmens (40) und/oder die Abstände seiner jeweils gegenüber liegenden Seitenflächen verstellbar sind.

5. Verfahren nach einem der Ansprüche 1 bis 4, bei dem eine erste Endlage des Überschubrahmens (40) in horizontaler Richtung im Bereich des ersten Fördermoduls (16) liegt und bei dem eine zweite Endlage des Überschubrahmens (40) in horizontaler Richtung im Bereich des zweiten Fördermoduls (34) liegt.

6. Verfahren nach einem der Ansprüche 1 bis 5, bei dem das vertikal bewegliche zweite Fördermodul (34) für die Ablage einer Artikellage oder Artikelgruppe (10) auf das Niveau eines Stapelplatzes (44) abgesenkt oder angehoben wird.

7. Verfahren nach einem der Ansprüche 1 bis 6, bei dem die ersten und zweiten Fördermodule (16, 34) während des Überschubvorganges in etwa synchrone Vertikalbewegungen ausführen.

8. Vorrichtung zur Handhabung und/oder zur Stapelung und/oder Palettierung von Artikelgruppen oder Artikellagen (10), umfassend ein vertikal bewegliches erstes Fördermodul (16) mit einer ersten Auflageebene (28) und ein dem ersten Fördermodul (16) in einer Förderrichtung (30) unmittelbar nachgeordnetes zweites Fördermodul (34) mit einer zweiten Auflageebene (38), wobei die Auflageebenen (28, 38) der ersten und zweiten Fördermodule (16, 34) zumindest während der Überschubbewegung (30) eine gemeinsame, in etwa auf gleicher Höhe befindliche oder gleichsinnig vertikal bewegte Überschubfläche bilden,
**dadurch gekennzeichnet, dass** wenigstens eine vertikal bewegliche, rahmenartige Überschubeinrichtung (22, 40) zur schiebenden Überführung einer Artikelgruppe oder Artikellage (10) vom ersten Fördermodul (16) zum zweiten Fördermodul (34), die geschobene Artikelgruppe oder Artikellage (10) allseitig umgreift.

9. Vorrichtung nach Anspruch 8, bei dem die Überschubeinrichtung (22) durch einen vertikal und horizontal beweglichen Überschubrahmen (40) gebildet ist, der von oben über eine auf dem ersten Fördermodul (16) stehende Artikelgruppe oder Artikellage (10) geschoben wird.

10. Vorrichtung nach Anspruch 8 oder 9, bei dem die Größe des Überschubrahmens (40) und/oder die Abstände seiner jeweils gegenüber liegenden Seitenflächen verstellbar sind.

11. Vorrichtung nach einem der Ansprüche 8 bis 10, bei dem die Seitenflächen des Überschubrahmens (40) nach unten hin jeweils trichterförmig aufgeweitet sind.

## Claims

1. Method for horizontal movement of groups or layers of articles (10) from a vertically movable first support level (28) of a first conveyor module (16) onto a vertically movable second support level (38) of a second conveyor module (34) located immediately downstream of the first conveyor module (16) in the direction of transport or transfer (30), by the at least one frame-like transfer device (22, 40), wherein the support levels (28, 38) of the first and second conveyor modules (16, 34) form a common transfer surface at approximately the same height or moving vertically in the same direction at least during the transfer movement,
**characterized in that** the transfer device (22, 40) is lowered over the groups or layers of articles (10) to be moved and encompasses the groups or layers of articles (10) on all sides, and which transfer device (22, 40) moves from the first conveyor module (16) to the second conveyor module (34) during the transfer movement of a group or layer of articles (10) in the direction of transport or transfer (30).

2. Method according to claim 1 in which the transfer device (22) is formed by a vertically and horizontally movable transfer frame (40) that is pushed from above over a group or layer of articles (10) onto the first conveyor module (16).

3. Method according to claim 1 or 2 in which the transfer device (22) or the transfer frame (40), respectively, moves the group or layer of articles (10) to be moved in a horizontal direction along the transfer surface onto the second conveyor module (34) and subsequently the transfer device (22) is raised from this position above the moved group or layer of articles (10).

4. Method according to any one of claims 1 to 3 in which the size of the transfer frame (40) and/or the distances between its respectively opposite lateral surfaces are adjustable.

5. Method according to any one of claims 1 to 4 in which a first final position of the transfer frame (40) is located horizontally in the area of the first conveyor module (16) and in which a second final position of the transfer frame (40) is located horizontally in the area of the second conveyor module (34).

6. Method according to any one of claims 1 to 5 in which the vertically movable second conveyor module (34) is lowered or raised to the level of a stacking area (44) for depositing a layer or group of articles (10).

7. Method according to any one of claims 1 to 6 in which the first and second conveyor modules (16, 34) perform approximately synchronous vertical movements during the transfer process.

8. Device for handling and/or stacking and/or palletizing groups of articles or layers of articles (10) comprising a vertically movable first conveyor module (16) with a first support level (28) and a second conveyor module (34) with a second support level (38) immediately downstream of the first conveyor module (16) in the direction of transport (30), wherein the support layers (28, 38) of the first and second conveyor modules (16, 34) form a common transfer surface at approximately the same height or moving vertically in the same direction at least during the transfer movement (30),
**characterized in that** it comprises at least one vertically movable frame-like transfer device (22, 40) for pushing over a group of articles or layer of articles (10) from the first conveyor module (16) to the second conveyor module (34) that encompasses the pushed group or layer of articles (10) on all sides.

9. Device according to claim 8 in which the transfer device (22) is formed by a vertically and horizontally movable transfer frame (40) that is pushed over a group of articles or layer of articles (10) onto the first conveyor module (16) from above.

10. Device according to claim 8 or 9 in which the size of the transfer frame (40) and/or the distances of its respectively opposite lateral surfaces are adjustable.

11. Device according to any one of claims 8 to 10 in which the lateral surfaces of the transfer frame (40) expand downward in a funnel configuration respectively.

## Revendications

1. Procédé de déplacement horizontal de groupes d'articles ou de couches d'articles (10) depuis un premier plan d'appui (28) déplaçable verticalement d'un premier module de transport (16) sur un deuxième plan d'appui (38) déplaçable verticalement d'un deuxième module de transport (34) qui est disposé immédiatement en aval du premier module de transport (16) dans une direction de transport ou de transfert par poussée (30), par le biais d'au moins un dispositif de transfert par poussée (22, 40) de type cadre, dans lequel les plans d'appui (28, 38) des premier et deuxième modules de transport (16, 34) forment, au moins durant le mouvement de transfert par poussée, une surface commune de transfert par poussée située à peu près à la même hauteur ou déplacée verticalement dans le même sens, **caractérisé par le fait que** ledit dispositif de transfert par poussée (22, 40) est abaissé sur le groupe d'articles ou la couche d'articles (10) à déplacer et se prend de tous les côtés autour de celui-ci/celle-ci et se déplace, durant le mouvement de transfert par poussée d'un groupe d'articles ou d'une couche d'articles (10), dans la direction de transport ou de transfert par poussée (30) depuis ledit premier module de transport (16) vers le deuxième module de transport (34).

2. Procédé selon la revendication 1, dans lequel ledit dispositif de transfert par poussée (22) est constitué par un cadre de transfert par poussée (40) qui est déplaçable de manière verticale et horizontale et qui est poussé d'en haut sur un groupe d'articles ou une couche d'articles (10) se trouvant sur le premier module de transport (16).

3. Procédé selon la revendication 1 ou 2, dans lequel ledit dispositif de transfert par poussée (22) ou bien ledit cadre de transfert par poussée (40) pousse le groupe d'articles ou la couche d'articles (10) à déplacer, dans la direction horizontale le long de la surface de transfert par poussée sur le deuxième module de transport (34) et est, ensuite, retiré de là du groupe d'articles ou de la couche d'articles (10) déplacé(e) en étant soulevé.

4. Procédé selon l'une quelconque des revendications 1 à 3, dans lequel la taille du cadre de transfert par poussée (40) et/ou les distances de ses surfaces latérales situées respectivement en vis-à-vis sont réglables.

5. Procédé selon l'une quelconque des revendications 1 à 4, dans lequel une première position extrême du cadre de transfert par poussée (40) dans la direction horizontale est située au niveau du premier module de transport (16), et dans lequel une deuxième position extrême du cadre de transfert par poussée (40) dans la direction horizontale est située au niveau du deuxième module de transport (34).

6. Procédé selon l'une quelconque des revendications 1 à 5, dans lequel ledit deuxième module de transport (34) déplaçable verticalement est abaissé ou soulevé au niveau d'un emplacement d'empilement (44) pour déposer une couche d'articles ou un groupe d'articles (10).

7. Procédé selon l'une quelconque des revendications 1 à 6, dans lequel les premier et deuxième modules de transport (16, 34) exercent des mouvements verticaux à peu près synchrones durant l'opération de transfert par poussée.

8. Dispositif de manipulation et/ou d'empilement et/ou de palettisation de groupes d'articles ou de couches d'articles (10), comprenant un premier module de transport (16) déplaçable verticalement et ayant un premier plan d'appui (28) ainsi qu'un deuxième module de transport (34) disposé immédiatement en aval du premier module de transport (16) dans une direction de transport (30) et ayant un deuxième plan d'appui (38), dans lequel les plans d'appui (28, 38) des premier et deuxième modules de transport (16, 34) forment, au moins durant le mouvement de transfert par poussée (30), une surface commune de transfert par poussée située à peu près à la même hauteur ou déplacée verticalement dans le même sens, **caractérisé par le fait qu'**au moins un dispositif de transfert par poussée (22, 40) de type cadre qui est déplaçable verticalement et destiné à transférer par poussée un groupe d'articles ou une couche d'articles (10) depuis le premier module de transport (16) vers le deuxième module de transport (34) se prend de tous les côtés autour du groupe d'articles ou de la couche d'articles (10) poussé(e).

9. Dispositif selon la revendication 8, dans lequel ledit dispositif de transfert par poussée (22) est constitué par un cadre de transfert par poussée (40) qui est déplaçable de manière verticale et horizontale et qui est poussé d'en haut sur un groupe d'articles ou une couche d'articles (10) se trouvant sur le premier module de transport (16).

10. Dispositif selon la revendication 8 ou 9, dans lequel la taille du cadre de transfert par poussée (40) et/ou les distances de ses surfaces latérales situées respectivement en vis-à-vis sont réglables.

11. Dispositif selon l'une quelconque des revendications 8 à 10, dans lequel les surfaces latérales du cadre de transfert par poussée (40) sont évasées chacune en entonnoir vers le bas.
